# EUROPÄISCHE PATENTSCHRIFT

(11) **EP 4 219 353 B1**
(45) Veröffentlichungstag und Bekanntmachung des Hinweises auf die Patenterteilung: **25.12.2024**
(21) Anmeldenummer: 22153509.9
(22) Anmeldetag: 26.01.2022
(51) Int. Cl.: B65G 47/08, B65G 47/244, B65G 47/71, B65G 47/76

(54) **ZUFÖRDERER ZUM SEPARIEREN EINES STROMS VON, INSBESONDERE GLEICHFÖRMIGEN, VERPACKUNGSEINHEITEN ZUR VERWENDUNG IN EINEM PALETTIERER ZUM PALETTIEREN DER VERPACKUNGSEINHEITEN**
FEED CONVEYOR FOR SEPARATING A FLOW OF, IN PARTICULAR UNIFORM, PACKAGING UNITS FOR USE IN A PALLETIZER FOR PALLETIZING PACKAGING UNITS
CONVOYEUR D'ALIMENTATION PERMETTANT DE SÉPARER UN ÉCOULEMENT D'UNITÉS D'EMBALLAGE, EN PARTICULIER UNIFORMES, UTILISABLE DANS UN PALETTISEUR PERMETTANT DE PALETTISER DES UNITÉS D'EMBALLAGE

(43) Veröffentlichungstag der Anmeldung: 02.08.2023
(73) Patentinhaber: BEUMER Group GmbH & Co. KG, 59269 Beckum (DE)
(72) Erfinder: Lüke, Christian, 59348 Lüdinghausen (DE); Krampe, Lars, 33449 Langenberg (DE)
(74) Vertreter: Angerhausen, Christoph

(56) Entgegenhaltungen:
- DE-A1- 102006 024 657
- DE-A1- 3 839 616
- GB-A- 1 395 879
- JP-A- S49 100 775
- JP-A- S50 138 572
- US-A- 3 587 876
- US-A- 5 320 478
- US-A- 5 787 679
- US-A1- 2014 339 049
- US-B1- 9 403 646
- US-B2- 10 176 662

## Beschreibung

Die Erfindung geht aus von einem Zuförderer zum Separieren eines Stroms von, insbesondere gleichförmigen, Verpackungseinheiten zur Verwendung in einem Palettierer zum Palettieren der Verpackungseinheiten, mit einem in einer Förderrichtung laufenden Separierförderer, welcher eine Empfangsseite zum Empfangen eines, insbesondere kontinuierlichen, Stroms von Verpackungseinheiten und eine Abgabeseite zum Abgeben der Verpackungseinheiten aufweist, wobei der Separierförderer eine Separiereinrichtung aufweist, welche dazu eingerichtet ist, den an der Empfangsseite in einer einzelnen Empfangstransportspur ankommenden Strom von Verpackungseinheiten, beispielsweise alternierend, in zwei an der Abgabeseite ausströmende Separiertransportspuren aufzuteilen, und mit zumindest zwei stromabwärts der Abgabeseite nebeneinander angeordneten Ausrichtförderern, welche jeweils eine Drehvorrichtung aufweisen oder als solche ausgebildet sind, um eine auf dem jeweiligen Ausrichtförderer transportierte Verpackungseinheit horizontal zu rotieren, wobei die zwei an der Abgabeseite des Separierförderers abfließenden und durch die Separiereinrichtung erzeugten Separiertransportspuren einerseits und die Drehvorrichtungen andererseits so zueinander ausgerichtet sind, dass die Übergabe der Verpackungseinheiten vom Separierförderer jeweils auf eine mittige Transportachse der Drehvorrichtung erfolgt. Eine derartige Vorrichtung ist bekannt aus der Druckschrift US 3,587,876 A1, welche ein Zuförderer gemäß dem Oberbegriff des Anspruchs 1 offenbart. Die Erfindung betrifft ferner ein entsprechendes Verfahren.

Palettierer dienen dazu, Produkte und/oder Gebinde auf einem Ladungsträger, beispielsweise einer Palette zu palettieren. Eine korrekt durchgeführte Palettierung, das heißt eine Stapelung von insbesondere gleichartigen Verpackungseinheiten auf einer Palette, ist entscheidend, um die Stabilität der gestapelten Verpackungseinheiten zu gewährleisten und um den verfügbaren Platz auf der Palettenfläche, meistens werden Europaletten verwendet, bestmöglich auszunutzen. Die Verpackungseinheiten können eine größere Länge als Breite aufweisen. Dabei stellt die Diagonale die größte Abmessung der Verpackungseinheiten dar. Um Einstürze der gestapelten Verpackungseinheiten zu vermeiden, welche selbst beim Einsatz von Schrumpffolie auftreten können und durch Transport und/oder der Handhabung der Paletten auftreten können, ist es notwendig, die Verpackungseinheiten nach einem vorbestimmten Schema zu Stapeln. Für eine Maximierung der Stabilität erfolgt das Stapeln der Verpackungseinheiten in der Regel überlappend, das heißt, jede Lage wird versetzt zu der darunter befindlichen angeordnet, so dass die Verpackungseinheiten einen möglichst großen Zusammenhalt aufweisen. Für die Bildung der einzelnen Lagen werden beim Palettierer mehrere Ströme von Verpackungseinheiten einem Lagenbildungsbereich zugeführt, in welchem die Verpackungseinheiten mit Schiebern zusammengeschoben und anschließend auf einen Ablegetisch geschoben werden. Der Ablegetisch besteht aus zwei Teilen, die eine offene und eine geschlossene Position einnehmen können. In der offenen Position fahren die beiden Teile des Ablegetischs auseinander und die Lage wird auf den Ladungsträger, beispielsweise eine Palette, oder auf darauf bereits palettierte Lagen abgegeben. Für die überlappende Anordnung der Lagen ist es notwendig, je nach Art des Lagenverbands einige Verpackungseinheiten längs, und andere quer zuzuführen, so dass die zugeführten Ströme die Verpackungseinheiten dementsprechend mittels einer Drehvorrichtung rotiert werden müssen.

Aus dem Stand der Technik ist bekannt, zum Verdrehen der Verpackungseinheiten diese außermittig auf ein Hindernis, beispielsweise einen Stab auflaufen zu lassen, wobei im Zuge des Weiterförderns der Verpackungseinheit diese um das Hindernis herum rotiert wird. Dazu ist es notwendig, die Verpackungseinheit vorher zur Bandseitenkante zu verschieben, an welcher sich das Hindernis befindet. Die Drehstab-Drehvorrichtung erfordert somit eine zum Rand des Förderers hin orientierte Transportachse. Allerdings weist diese Drehmethode den Nachteil auf, dass durch die Kollision der Verpackungseinheit mit dem Hindernis die Verpackungseinheit Schaden nehmen kann oder Quetschungen bzw. Beulen erzeugt werden. Demgegenüber ermöglichen Klammer-Drehvorrichtungen und Doppelband-Drehvorrichtungen ein schonenderes Drehen der Verpackungseinheiten. Allerdings erfordern diese Methoden gegenüber der Drehstab-Drehvorrichtung eine mittige Positionierung der Verpackungseinheiten auf dem jeweiligen Förderer, das heißt, die Transportachsen der Verpackungseinheiten müssen zur Mitte des Förderers hin orientiert sein.

Für eine Ausrichtung der Verpackungseinheiten an der Bandseitenkante ist ein ebenfalls aus dem Stand der Technik bekannter Separierförderer verwendbar. Diese separiert einen an einer Eingangsseite in einer Spur ankommenden Strom aus Verpackungseinheiten in zwei parallel nebeneinander laufende Teilströme, welche aus einer Ausgangsseite des Separierförderers ausströmen. Hierzu weist die Separiervorrichtung ein entlang der Förderstrecke angeordnetes Separierschwert auf, welches zwischen zwei Positionen verschwenkbar ist und dadurch zum einen zwei Pfade für einströmende Verpackungseinheiten bereitstellt und zum anderen die Verpackungseinheiten, sobald diese sich neben dem Separierschwert befinden, aktiv in einer Querrichtung relativ zur Förderrichtung verschiebt. Das Separierschwert ist in der Mitte des Separierförderers schwenkbar gelagert und weist in Richtung der Eingangsseite des Separierförderers. Durch die Anordnung der Schwenkachse ist es allerdings nur bis zu einem gewissen Grad möglich, die Verpackungseinheiten in Querrichtung auszulenken. Dies führt dazu, dass eine Übergabe an nachfolgende, eine Drehstab-Drehvorrichtung aufweisende, Fördervorrichtungen nur außermittig erfolgen kann bzw. jeweils an einer Bandseitenkante der Fördervorrichtungen.

Es ist daher die objektiv technische Aufgabe der vorliegenden Erfindung, einen Zuförderer für einen Palettierer derart weiterzuentwickeln, dass dadurch ein schonendes seitliches Versetzen und ein schonendes Drehen der Verpackungseinheiten sowie ein effizientes Palettieren ermöglicht wird.

Demgemäß wird ein Zuförderer gemäß Anspruch 1 vorgesehen, wobei die Separiereinrichtung in Förderrichtung einen ersten und einen zweiten Separierabschnitt aufweist, wobei die Separiereinrichtung im ersten Separierabschnitt ein bewegliches Auslenkelement zum aktiven seitlichen Auslenken der Verpackungseinheiten aus ihrer Transportposition aufweist und im zweiten Separierabschnitt zumindest ein die Separiertransportspuren jeweils mittig begrenzendes Leitelement zum passiven seitlichen Auslenken der Verpackungseinheiten aus ihrer Transportposition aufweist, wobei die Separiertransportspur im zweiten Separierabschnitt zu einer Seitenkante des Separierförderers hin ausgerichtet ist.

Der Separierförderer mit der Separiereinrichtung dient dem Ausrichten der Transportachsen für Palettier-Maschinen mit zumindest zwei parallel angeordneten Transportspuren. Die Vorrichtung verteilt zu transportierende Transportgüter (z.B. Säcke, Gebinde, Kartons) aus einer Einlaufachse auf zwei Transportspuren auf. Die Übergabe der Transportgüter an die am Separierförderer nachfolgenden Förderer erfolgt jeweils auf eine mittige Transportachse der Drehvorrichtung. Dadurch wird ein Einsatz von Klammer-Drehvorrichtungen oder Doppelband-Drehvorrichtungen für die Rotation der Transportgüter ermöglicht, welche eine mittige Transportachse erfordern.

Die Verpackungseinheiten können insbesondere mit Schüttgut befüllte Säcke sein. Die Säcke können insbesondere Materialien für die chemische oder die Bauindustrie enthalten. Der Separierförderer kann ein Förderband aufweisen. Der Separierförderer kann eine Rollenbahn aufweisen. Es kann vorgesehen sein, dass der Separierförderer ein mittels einer Rollenbahn angetriebenes Förderband aufweist. Die Separiereinrichtung kann dazu eingerichtet sein, die Verpackungseinheiten bei Abgabe an der Abgabeseite der Separiereinrichtung in einer maximalen Randposition, insbesondere fluchtend mit einer Bandseitenkante, an den Ausrichtungsförderer zu übergeben. Die Ausrichtförderer können mehrere Förderabschnitte aufweisen. Ein Förderabschnitt des Ausrichtförderers kann als Schwerkraftrollenbahn ausgebildet sein. Der als Schwerkraftrollenbahn ausgebildete Abschnitt kann unmittelbar an den Separierförderer angrenzen. Ein weiterer Abschnitt kann dazu ausgebildet sein oder eine Vorrichtung dazu aufweisen, die Verpackungseinheiten horizontal zu rotieren. Es kann vorgesehen sein, dass der Abschnitt, in welchem die Verpackungseinheiten rotiert werden, eine Mindestbreite aufweist, welche größer ist als die maximale horizontale Abmessung der Verpackungseinheit, beispielsweise die Diagonale eines transportierten Sacks. Es kann vorgesehen sein, dass die Ausrichtförderer unmittelbar parallel nebeneinander angeordnet sind und dass die Gesamtbreite der Abschnitte, in welchen die Verpackungseinheiten rotiert werden, der Breite des Separierförderers entspricht oder breiter als diese Breite ist. Es kann vorgesehen sein, dass die Separiertransportspuren an der Abgabeseite des Separierförderers, insbesondere deren Ausrichtung quer zur Förderrichtung, jeweils durch zumindest ein Leitelement des Separierförderers definiert werden.

Die Separiereinrichtung kann eine Gesamtlänge aufweisen, welche zumindest der vierfachen Länge einer zu fördernden Verpackungseinheit entspricht. Insbesondere kann die Gesamtlänge der Separiereinrichtung zumindest der vierfachen Länge eines zu fördernden mit Schüttgut befüllten Sacks entsprechen. Derartige Säcke können oftmals übliche Standardmaße aufweisen. Beispielsweise kann ein zu fördernder Sack eine Länge von 600 mm aufweisen. Dementsprechend kann die Separiereinrichtung eine Mindestlänge von 2.400 mm aufweisen. Vorzugsweise kann die Länge der Separiereinrichtung 3.390 mm betragen. Es kann vorgesehen sein, dass der seitliche Verschiebeweg, welcher mittels der Separiereinrichtung realisierbar ist, zumindest 655 mm beträgt.

Es kann vorgesehen sein, dass die Drehvorrichtungen dazu ausgebildet sind, die Verpackungseinheiten um eine vertikale Achse zu rotieren, welche die mittige Transportachse der Drehvorrichtung schneidet. Dabei können die Ausrichtförderer jeweils als Doppelband-Drehvorrichtung ausgebildet sein oder eine Klammer-Drehvorrichtung aufweisen. Die Doppelband-Drehvorrichtung kann zwei parallel laufende, in der mittigen Transportachse voneinander getrennte Förderbänder aufweisen, welche mit individuellen Geschwindigkeiten und/oder Förderrichtungen betreibbar sind. Die Klammer-Drehvorrichtung kann oberhalb des Ausrichtförderers angeordnet sein. Die Klammer-Drehvorrichtung kann einen Greifer aufweisen, mittels welchem die Verpackungseinheit seitlich gegriffen und gegebenenfalls angehoben werden kann. Der Greifer ist um eine vertikale Achse rotierbar, so dass die Verpackungseinheit in einer ersten Ausrichtung gegriffen und in einer zweiten, zur ersten Ausrichtung horizontal verdrehten, insbesondere um 90 Grad, wieder auf dem Ausrichtförderer abgesetzt werden kann.

Es ist denkbar, dass die Transportachsen der Drehvorrichtungen jeweils kollinear zu einer jeweiligen Mittelachse der Separiertransportspuren ausgerichtet sind.

Es kann vorgesehen sein, dass das Separieren der Verpackungseinheiten auf die zwei Separiertransportspuren im Zuge des Förderns der Verpackungseinheiten entlang des Separierförderers erfolgt. Das bedeutet, dass die Verpackungseinheiten während des Separierens stets in Förderrichtung weitergefördert werden können.

Der Empfangsseite des Separierförderers kann ein Eingangsförderer zum Anliefern des in einer einzelnen Empfangstransportspur laufenden Stroms von Verpackungseinheiten stromaufwärts vorgelagert sein, wobei die Aufgabe der Verpackungseinheiten auf den Separierförderer auf eine mittige Transportachse erfolgt. Die mittige Transportachse verläuft parallel zur Förderrichtung durch die Schwenkachse des Separierschwerts. Der Eingangsförderer kann eine geringere Breite als der Separierförderer aufweisen und diesem mittig vorgelagert sein.

Das aktive Auslenken kann darin bestehen, dass mittels des aktiven Auslenkelements bewegliches Verschieben der Verpackungseinheiten quer zur Förderrichtung ermöglicht ist, während die Verpackungseinheiten am Auslenkelement vorbeigeführt werden. Es kann vorgesehen sein, dass das bewegliche Auslenkelement eine erste Auslenkposition aufweist, welche einströmende Verpackungseinheiten auf eine erste Separiertransportspur leitet, wobei im Zuge des Passierens des Auslenkelements durch die Verpackungseinheiten das Auslenkelement in eine zweite Auslenkposition verschwenkt wird, so dass die passierenden Verpackungseinheiten seitlich aus ihrer Transportachse verschoben werden, entsprechend der Bewegung des Auslenkelements. Im Zuge des Verschwenkens des Auslenkelements in die zweite Auslenkposition kann eingangsseitig die mittig einströmende Empfangstransportspur von dem dann verschwenkten Auslenkelements auf die zweite Separiertransportspur geleitet werden und im Zuge des Passierens des Auslenkelements durch die Verpackungseinheiten das Auslenkelement erneut in die erste Auslenkposition verschwenkt werden, so dass die in der zweiten Separiertransportspur befindlichen, das Auslenkelement passierenden Verpackungseinheiten ebenfalls seitlich aus ihrer Transportachse verschoben werden, entsprechend der Bewegung des Auslenkelements.

Es kann vorgesehen sein, dass die Separiertransportspur im ersten Separierabschnitt zur Mitte des Separierförderers hin ausgerichtet ist. Im ersten Separierabschnitt kann das bewegliche Auslenkelement nach Durchführung der Auslenkbewegung zum Verschieben einer Anzahl von Verpackungseinheiten in Richtung Bandseitenkante so ausgerichtet sein, dass die durch das Auslenkelement mittig bereitgestellte Führungskante in Förderrichtung in Richtung der Mitte des Förderbands weist. Die Separiereinrichtung kann im zweiten Separierabschnitt zumindest zwei sich aufspreizende, von der Mitte des Förderbands jeweils in Richtung der Bandseitenkanten verlaufende Leitelemente aufweisen, welche dafür sorgen, dass die Separiertransportspuren im zweiten Separierabschnitt jeweils zu den Bandseitenkanten des Separierförderers hin ausgerichtet sind.

Das bewegliche Auslenkelement kann ein zwischen zwei Auslenkpositionen verschwenkbares, sich im Wesentlichen in Förderrichtung erstreckendes Separierschwert aufweisen. Die Schwenkachse des Separierschwerts kann am stromabwärtigen Ende des Separierschwerts angeordnet sein. Das Separierschwert kann in Querrichtung mittig auf dem Separierförderer angeordnet sein und zwei gegenüberliegende Führungskanten aufweisen, welche die Separiertransportspuren jeweils mittig begrenzen. Diese gegenüberliegenden Seitenführungen können dabei zum Entlangführen und seitlichen Auslenken von Verpackungseinheiten ausgebildet sein. In seinen Auslenkpositionen kann das Separierschwert mit seinem empfangsseitigen Ende jeweils seitlich der Empfangstransportachse angeordnet sein, sodass nach Auslenkung des Separierschwerts die einströmenden Verpackungseinheiten in die eine oder die andere Separiertransportspur geleitet werden. Das Separierschwert kann an seinem empfangsseitigen Ende zudem in einer Führungsschiene geführt werden und mittels einer motorischen Verstelleinrichtung zwischen den beiden Auslenkpositionen verschwenkbar sein. An seiner gegenüberliegenden Seite, welche sich stromabwärts befindet, kann das Separierschwert schwenkbeweglich gelagert sein und von einem den Separierförderer überbrückenden Rahmengestell gehalten werden. Es kann insbesondere vorgesehen sein, dass das aktive Verschieben der Verpackungseinheiten das Auslenken des Separierschwerts in einer Richtung im Wesentlichen quer zur Förderrichtung umfasst. Der erste Separierabschnitt kann jeweils den Führungskanten des Separierschwerts gegenüberliegende Seitenführungen aufweisen, welche so angeordnet sind, dass diese in Förderrichtung auf die Mitte des Separierförderers zulaufen.

In einer ersten Auslenkposition der Separiereinrichtung können empfangsseitig ankommende Verpackungseinheiten in eine erste der Separiertransportspuren und in einer zweiten Auslenkposition der Separiereinrichtung empfangsseitig ankommende Verpackungseinheiten in eine zweite der Separiertransportspuren strömen. Dazu kann wie oben beschrieben das empfangsseitige Ende des Separierschwerts jeweils in eine Position jenseits der mittigen Empfangstransportachse verschwenkt werden, sodass die einströmenden Verpackungseinheiten jeweils auf eine der Führungskanten des Separierschwerts zulaufen und an dieser entlanggeführt werden.

Es kann vorgesehen sein, dass zum passiven Auslenken im zweiten Separierabschnitt das Entlangführen der Verpackungseinheiten an den in Förderrichtung zur Außenseite des Separierförderers gerichteten Leitelementen erfolgt, wobei die Leitelemente beim Entlangführen der Verpackungseinheiten stillstehen. Die Leitelemente können dazu gegenüber der Förderrichtung einen jeweils nach außen gerichteten Winkelversatz aufweisen. Gegenüber dem aktiven Auslenken mittels des zwischen den Auslenkpositionen verstellbaren Separierschwerts im ersten Separierabschnitt werden die Verpackungseinheiten im zweiten Separierabschnitt lediglich an den zu den Bandseitenkanten gerichteten Leitelementen der Separiervorrichtung entlanggeführt, bis diese die richtige Ausrichtung für eine Übergabe auf die mittigen Transportachsen der den Separierförderer nachfolgenden Ausrichtförderern erreicht haben. Somit erfolgt im ersten Separierabschnitt zunächst ein Aufteilen der einströmenden Verpackungseinheiten auf die beiden Separiertransportspuren sowie ein erstes Auslenken aus der mittigen Transportachse, sodass der Abstand der Verpackungseinheiten bis zu den Bandseitenkanten im ersten Separierabschnitt beispielsweise noch ein Viertel der Breite des Separierförderers beträgt. Im zweiten Separierabschnitt laufen die Verpackungseinheiten dann durch Weiterfördern mittels des Separierförderers auf die nach außen gerichteten Leitelemente auf und werden entlang dieser bis zu ihren letztendlichen Auslasspositionen geführt. Es kann vorgesehen sein, dass die Leitelemente an ihrem stromaufwärtigen Ende gelenkig gelagert sind, sodass die stromabwärtigen Enden der Leitelemente quer zur Förderrichtung verschwenkbar sind. Es kann vorgesehen sein, dass die Leitelemente motorisch verstellt werden können, beispielsweise, um den Separierförderer an unterschiedliche Größen von Verpackungseinheiten anpassen zu können. Es kann ferner vorgesehen sein, dass das Separierschwert einerseits und die Leitelemente andererseits in einem Punkt zusammenlaufen, sodass die Führungskanten des Separierschwerts und die Führungsflächen der Leitelemente jeweils ineinander übergehen.

Durch die stromabwärtigen Enden der Leitelemente kann eine mittlere Begrenzung der jeweiligen Separiertransportspur für die aus der Abgabeseite des Separierförderers ausströmenden Verpackungseinheiten bereitgestellt sein. Dabei kann vorgesehen sein, dass die Enden der Leitelemente über den Separierförderer hinaus jeweils bis auf die Ausrichtförderer ragen. Ferner können zumindest zwei den Übergang zwischen dem Separierförderer und den Ausrichtförderern jeweils in Förderrichtung überbrückend angeordnete Seitenleitelemente vorgesehen sein, durch welche jeweils eine seitliche Begrenzung der jeweiligen Separiertransportspur für die aus der Abgabeseite des Separierförderers ausströmenden Verpackungseinheiten bereitgestellt ist. Die Seitenleitelemente und die Enden der Leitelemente der Separiereinrichtung können somit im Übergabebereich zwischen Separierförderer und den Ausrichtförderern gegenüberliegend angeordnet sein und die Passage jeweils seitlich begrenzen.

Es kann vorgesehen sein, dass mittels der Leitelemente unterschiedliche Breiten der Separiertransportspuren einstellbar sind. Dabei können die Leitelemente zumindest einen Motor aufweisen, mittels welchem diese verstellbar sind.

Die Erfindung betrifft ferner ein Verfahren gemäß Anspruch 14 zum Betreiben eines Zuförderers für einen Palettierer, aufweisend die Schritte:
Mittiges Aufgeben eines kontinuierlichen Stroms von Verpackungseinheiten auf die Empfangsseite eines Separierförderers;
Verschieben zumindest einer ersten Verpackungseinheit in Richtung einer ersten Außenseite des Separierförderers mittels einer dem Separierförderer zugeordneten Separiereinrichtung;
Verschieben zumindest einer zweiten Verpackungseinheit in Richtung einer zweiten Außenseite des Separierförderers mittels der Separiereinrichtung;
Übergeben der ersten Verpackungseinheit auf eine mittige Transportachse einer dem Separierförderer stromabwärts nachfolgenden ersten Drehvorrichtung;
Übergeben der zweiten Verpackungseinheit auf eine mittige Transportachse einer dem Separierförderer stromabwärts nachfolgenden zweiten Drehvorrichtung.

Das Verfahren kann ferner den Schritt aufweisen:
Horizontales Drehen der ersten und/oder der zweiten Verpackungseinheit auf dem ersten und/oder zweiten Separierförderer um etwa 90 Grad mittels einer die jeweilige Verpackungseinheit um ihre vertikale Mittelachse rotierenden Verdrehvorrichtung.

Darüber hinaus können die Verpackungseinheiten durch die Verdrehvorrichtung so gedreht werden, dass die vertikale Mittelachse der Verpackungseinheit vor und nach dem Verdrehen die mittige Transportachse der Drehvorrichtung schneidet.

Ferner können die Ausrichtförderer als Doppelband-Drehvorrichtung ausgebildet sein oder eine Klammer-Drehvorrichtung aufweisen.

Es kann vorgesehen sein, dass die Verpackungseinheiten eine größere Länge als Breite aufweisen und in Längsausrichtung auf den Separierförderer aufgegeben werden.

Die Ausrichtförderer können jeweils eine Breite aufweisen, welche größer ist als die größte Abmessung der Verpackungseinheit, insbesondere deren Diagonalabmessung. Dadurch kann gewährleistet werden, dass die Verpackungseinheiten auf dem Ausrichtförderer verdreht werden können, ohne dabei mit einer Seitenkante des Ausrichtförderers in Kontakt zu kommen und gegebenenfalls aus der mittigen Transportachse gedrängt zu werden.

Das Verschieben der Verpackungseinheiten in Richtung der Außenseiten des Separierförderers in einem ersten Abschnitt kann ein aktives Verschieben umfassen und in einem zweiten Abschnitt ein passives Verschieben umfassen. Es kann vorgesehen sein, dass das aktive Verschieben der Verpackungseinheiten durch eine Bewegung eines Auslenkelements der Separiereinrichtung erfolgt. Die Bewegung kann dabei im Wesentlichen quer zur Förderrichtung erfolgen. Das Verschieben der Verpackungseinheiten in Querrichtung kann im Zuge der Förderbewegung der Verpackungseinheiten auf dem Separierförderer erfolgen. Das passive Verschieben kann durch während des Vorbeiförderns stillstehende Leitelemente der Separiereinrichtung erfolgen, welche so angeordnet sind, dass diese die Transportachsen der Verpackungseinheiten schneiden und diese im Zuge deren Förderbewegung passiv aus deren Transportachse drängen, so dass diese eine Bewegung in Richtung der Bandseitenkanten ausführen. Dementsprechend kann das passive Verschieben der Verpackungseinheiten das Entlangführen der Verpackungseinheiten entlang eines in Förderrichtung zur Außenseite des Separierförderers gerichteten Leitelements umfassen.

Beispielhafte Ausführungsformen der Erfindung werden anhand der nachfolgenden Figuren erläutert. Dabei zeigt:
- Fig. 1: eine Draufsicht auf eine Ausführungsform eines aus dem Stand der Technik bekannten Separierförderers;
- Fig. 2: eine perspektivische Gesamtansicht einer Ausführungsform des erfindungsgemäßen Palettierers;
- Fig. 3: eine Draufsicht auf eine Ausführungsform des erfindungsgemäßen Zuförderers;
- Fig. 4: eine perspektivische Ansicht einer Ausführungsform des erfindungsgemäßen Separierförderers;
- Fig. 5: eine Draufsicht auf eine Ausführungsform des erfindungsgemäßen Separierförderers.

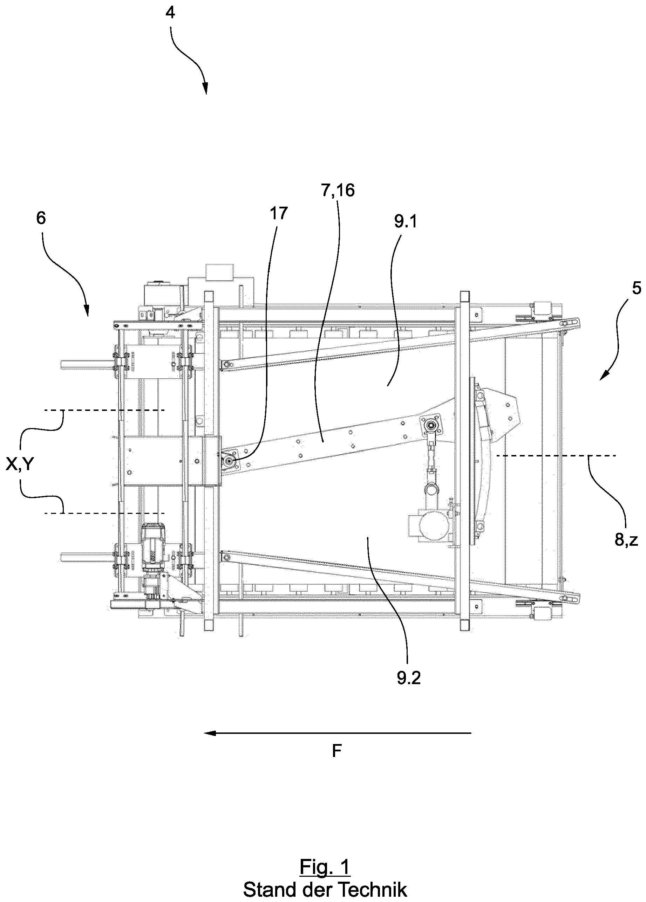

Der in Figur 1 gezeigte aus dem Stand der Technik bekannte Separierförderer 4 besteht im Wesentlichen aus einer Fördervorrichtung, welche eine stromaufwärtige Empfangsseite 5 und eine stromabwärtige Ausgangsseite 6 aufweist. Dabei ist vorgesehen, dass Verpackungseinheiten an der Empfangsseite 5 entlang einer mittigen

Transportachse Z in einer einzelnen Empfangstransportspur 8 in den Separierförderer 4 einströmen. Eine Separiereinrichtung 7, welche im Wesentlichen ein quer zur Förderrichtung F verschwenkbares Separierschwert 16 aufweist, dient dazu, die einströmende einzelne Empfangstransportspur 8 in zwei Separiertransportspuren 9.1, 9.2 aufzuteilen, damit diese an der Ausgangsseite 6 getrennt auf einen nachfolgenden Förderer übergeben werden können. Das Separierschwert 16 ist um eine im Bereich der Ausgangsseite 6 angeordnete ortsfeste Schwenkachse 17 zwischen zwei Auslenkpositionen verstellbar und kann dadurch jeweils die eine oder die andere Separiertransportspur 9.1, 9.2 freigeben. In der gezeigten Darstellung befindet sich das stromaufwärtige Ende des Separierschwerts 16 oberhalb der mittigen Empfangstransportachse Z, sodass die Separiertransportspur 9.2 freigegeben ist. Wenn nun Verpackungseinheiten mittig einströmen, laufen diese auf die diesen zugewandte Führungskante des Separierschwerts 16 zu und werden entlang dieser in Förderrichtung gefördert. Wenn sich die Verpackungseinheiten neben dem Separierschwert 16 befinden, verschwenkt dieses in die untere Auslenkposition und verschiebt dadurch die eingeströmten Verpackungseinheiten aktiv in Richtung der unteren Bandseitenkante des Separierförderers 4. Gleichzeitig wird die Separiertransportspur 9.1 freigegeben, so dass der Vorgang in dieser Separiertransportspur 9.1 wiederholt werden kann. Das Separierschwert 16 verschiebt die Verpackungseinheiten in seiner maximalen Auslenkposition allerdings nicht bis ganz zur Bandseitenkante, sondern die Verpackungseinheiten verlassen den Separierförderer 4 entlang der eingezeichneten Transportachsen X, Y, so dass eine Übergabe an stromabwärts des Separierförderers 4 angeordnete Förderer so erfolgt, dass die Verpackungseinheiten außermittig jeweils auf den Innenseiten der Förderer positioniert sind. Dies funktioniert wie oben beschrieben bei der Verwendung von Stab-Drehvorrichtung, nicht jedoch, wenn Doppelband-Drehvorrichtungen oder Klammer-Drehvorrichtungen zum schonenden Drehen von Verpackungseinheiten verwendet sollen, welche eine mittige Aufgabe der Verpackungseinheiten auf die nachfolgenden Förderer benötigen.

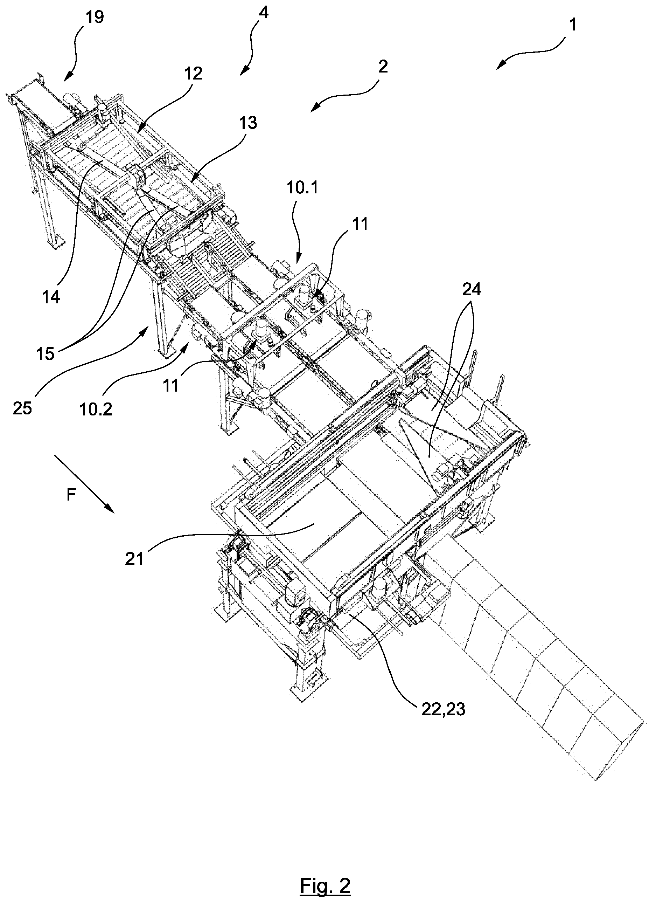

Figur 2 zeigt eine Gesamtansicht einer Ausführungsform eines Palettierers 1, welcher einen erfindungsgemäßen Zuförderer 2 aufweist. Über einen Eingangsförderer 19 strömen Verpackungseinheiten mittig auf den Separierförderer 4, welcher die Verpackungseinheiten im Wesentlichen von einer einzelnen Spur auf zwei Separiertransportspuren aufteilt und die Verpackungseinheiten ferner jeweils in Richtung der Bandseitenkanten verschiebt. Dazu weist der Separierförderer 4 in einem ersten Separierabschnitt 12 ein Auslenkelement 14 bzw. ein Separierschwert 16 auf, welches wie im Zusammhang mit Figur 1 beschrieben zwischen zwei Auslenkpositionen verschwenkbar ist und die Verpackungseinheiten aktiv aus ihrer Transportachse herausdrängt. An den ersten Separierabschnitt 12 schließt sich ein zweiter Separierabschnitt 13 an, in welchem durch Anordnung zweier die Transportachsen der Separiertransportspuren 9.1, 9.2 schneidende Leitelemente 15 ein passives Herausdrängen der Verpackungseinheiten aus ihren Transportachsen erzielt wird. An den Separierförderer 4 schließen sich stromabwärts zwei parallele Ausrichtförderer 10.1, 10.2 an, welche die separierten Verpackungseinheiten weiterfördern und jeweils eine Klammer-Drehvorrichtung 11 aufweisen, mittels welcher die Verpackungseinheiten mittig rotiert werden können, so dass diese in der mittigen Transportachse verbleiben. Dabei werden für eine Palettierlage jeweils die Verpackungseinheiten auf einem ersten der Ausrichtförderer 10.1 um 90 Grad rotiert, so dass diese quer ausgerichtet sind, während demgegenüber die Verpackungseinheiten auf einem zweiten der Ausrichtförderer 10.2 in ihrer Längsausrichtung verbleiben. Für die nachfolgende Lage verbleiben dann die Verpackungseinheiten auf dem ersten Ausrichtförderer 10.1 in Längsausrichtung und werden auf dem zweiten Ausrichtförderer 10.2 rotiert usw. Anschließend werden die Verpackungseinheiten einem Lagenbildungsbereich zugeführt, in welchem die Verpackungseinheiten für eine Palettenlage gesammelt und dann mittels Abschiebern 24 in Richtung eines Ablegetischs 21 geschoben werden. Unter diesem befindet sich ein Hubwerk 22 und eine Hubwerksrollenbahn 23 auf welcher die zu beladende Palette positioniert ist. Der Ablegetisch besteht aus zwei Teilen, die eine offene und eine geschlossene Position einnehmen können. In der offenen Position fahren die beiden Teile des Ablegetischs auseinander und die Lage wird auf die Palette, oder auf darauf bereits palettierte Lagen abgegeben.

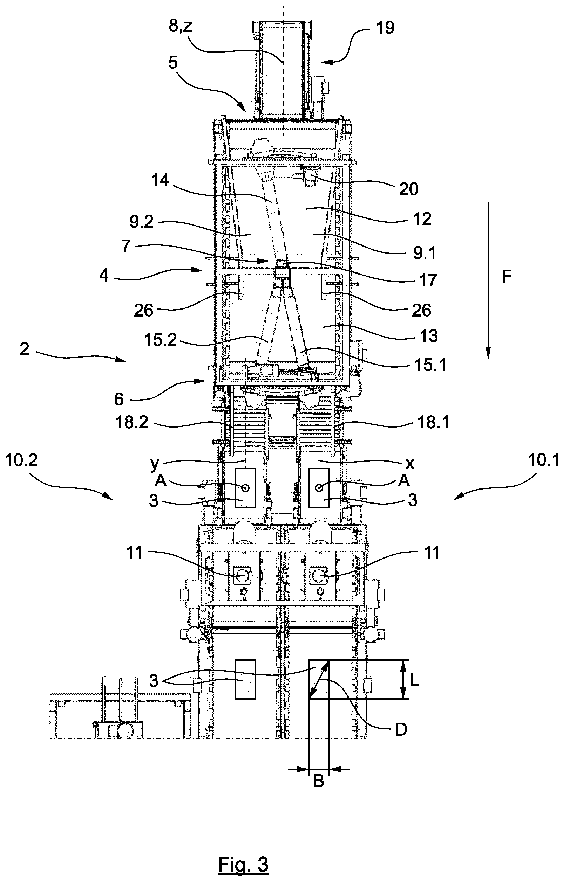

Figur 3 zeigt eine Draufsicht auf eine Ausführungsform des erfindungsgemäßen Zuförderers 2. Über den Eingangsförderer 19 strömen in einer einzelnen Empfangstransportspur 8 kontinuierlich Säcke 3 in einer mittigen Transportachse Z auf eine Empfangsseite 5 des Separierförderers 4. Dieser weist einen ersten Separierabschnitt 12 auf, in welchem mittels des Auslenkelements 14 bzw. des Separierschwerts 16 die ankommenden Säcke 3 auf die Separiertransportspuren 9.1, 9.2 verteilt werden und durch aktives Verschwenken des Auslenkelements 14, wenn sich die Säcke neben diesem befinden, die Säcke quer zur Förderrichtung F aus ihren jeweiligen Transportachsen verschiebt. Die Säcke 3 werden im ersten Separierabschnitt 12 zwischen der jeweiligen Führungskante des Separierschwerts einerseits und der jeweiligen Seitenführung 26 seitlich geführt. Im zweiten Separierabschnitt 13 werden die aus dem ersten Separierabschnitt 12 bereits leicht außermittig einströmenden Säcke 3 dann mittels der mittig angeordneten und in Richtung der Bandseitenkanten laufenden Leitelementen 15.1, 15.2 bis hin zur maximal äußeren Lage, d.h., in etwa bündig mit der jeweiligen Bandseitenkante geführt. Es ist zu erkennen, dass die Separiertransportspuren 9.1, 9.2 im ersten Separierabschnitt 12 jeweils in Richtung der Mitte des Separierförderers 4 ausgerichtet, und im zweiten Separierabschnitt 13 jeweils in Richtung der Bandseitenkanten ausgerichtet sind. Die Säcke 3 werden entlang von Transportachsen X, Y mittig auf die Ausrichtförderer 10.1,10.2 übergeben. Im Übergangsbereich zwischen dem Separierförderer 4 und den Ausrichtförderern 10.1,.10.2 sind jeweils seitliche Seitenelemente 18.1,.18.2 angeordnet, welche sich in Förderrichtung F erstrecken und im Wesentlichen entlang von an den Separierförderer 4 angrenzenden Schwerkraftrollenbahnen 25 erstrecken. Die Enden der Seitenelemente 18.1,.18.2 erstrecken sich dabei jedoch zum einen stromaufwärts bis auf den Separierförderer 4, so dass diese gemeinsam mit den Enden der Leitelemente 15.1, 15.2 die Passage für die Säcke 3 zwischen dem Separierförderer und den Ausrichtförderern definieren. Zum anderen erstrecken sich die Seitenelemente 18.1, 18.2 bis auf an die Schwerkraftrollenbahnen 25 angrenzende Bandförderer, so dass die Säcke entlang der gesamten Strecke zwischen dem Separierförderer 4 und dem an die Schwerkraftrollenbahnen 25 angrenzenden Bandförderer seitlich geführt werden. Die Seitenelemente 18.1, 18.2 dienen vor allem dem Zweck zu verhindern, dass die Säcke bei Staudruck durch eine Mehrzahl nachfolgender Säcke nicht seitlich von der Schwerkraftrollenbahn herunterfallen. Auf daran anschließenden Bandförderern, welche eine größere Breite aufweisen, findet dann der eigentliche Ausrichtvorgang statt. Im Sinne der vorliegenden Anmeldung zählen die Schwerkraftrollenbahn, der nachfolgende Bandförderer mit geringer Breite sowie der daran anschließende Bandförderer mit größerer Breite zum Ausrichtförderer 10.1, 10.2. Für die Rotation der Säcke um ihre vertikale Mittelachse A in der mittigen Transportachse X, Y werden Klammer-Drehvorrichtungen 11 verwendet. In der gezeigten Darstellung wurde auf dem rechten Ausrichtförderer 10.1 ein Sack 3 um 90 Grad gedreht, so dass dieser in Querausrichtung weitergefördert wird. Demgegenüber wurde der Sack 3 auf dem linken Ausrichtförderer 10.2 nicht gedreht, so dass dieser in Längsrichtung weitergefördert wird. Die Säcke weisen eine größere Länge L als Breite B auf. Dabei stellt die Diagonale D die größte Abmessung der Säcke dar. Im Bereich der Klammer-Drehvorrichtungen 11 weisen die Ausrichtförderer jeweils eine Breite auf, welche größer ist als die Diagonale D der Säcke 3.

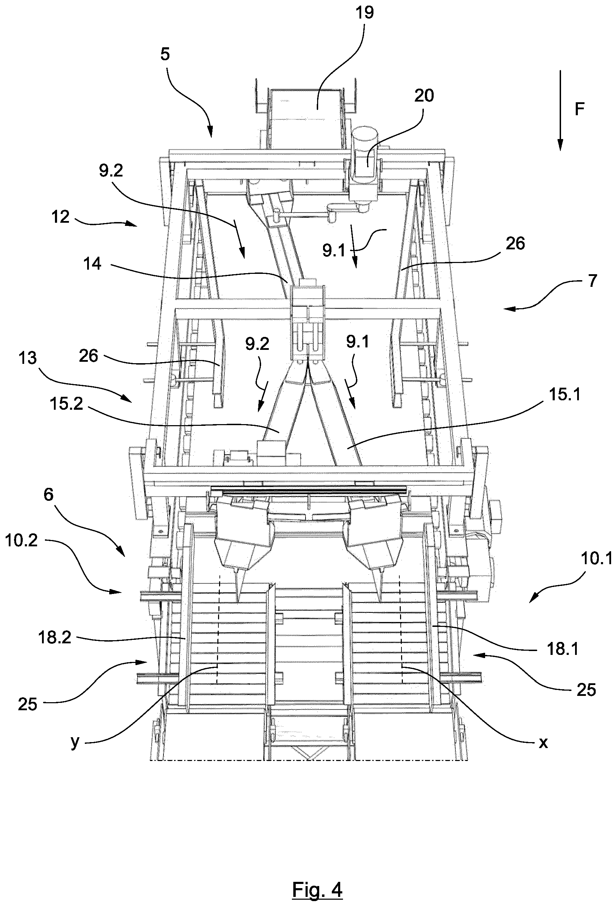

Fig. 4 zeigt eine perspektivische Frontalansicht der Separiereinrichtung 4. Das Auslenkelement 14 im ersten Separierabschnitt 12 und die Leitelemente 15.1,.15.2 im zweiten Separierabschnitt 13 laufen in einem gemeinsamen Punkt zusammen. Dadurch weist der Übergang zwischen den Führungskanten des Separierschwerts 16 und den Leitelementen 15 keinen Vorsprung auf, an welchem die Säcke hängen bleiben könnten. Das Separierschwert 16 und die Leitelemente 15.1, 15.2 sind jeweils in einer den Separierförderer 4 quer überspannende Rahmenkonstruktion verschwenkbar gelagert. Das Separierschwert weist an der Empfangsseite 5 des Separierförderers 4 eine motorische Verstelleinrichtung 20 auf, mittels welche das Separierschwert 16 entlang einer Führungsschiene quer zur Förderrichtung F verschwenkt werden kann. Zum Einstellen des Separierförderers sind auch die im Betrieb passiven Leitelemente 15.1,.15.2 motorisch quer zur Förderrichtung verstellbar, so dass eine Anpassung auf unterschiedliche Größen von Verpackungseinheiten möglich ist. Im Bereich des ersten Separierabschnitts 12 werden die Separiertransportspuren seitlich zum einen in der Mitte von den Führungskanten des Separierschwerts 16 definiert, und zum anderen seitlich durch die Seitenführungen 26. Diese weisen jeweils einen ersten Abschnitt auf, welcher in Förderrichtung F in Richtung der Mitte des Separierförderers 4 ausgerichtet ist, sowie einen daran anschließenden zweiten Abschnitt, welcher parallel zur Förderrichtung F ausgerichtet ist und in den zweiten Separierabschnitt 13 hineinragt. Im zweiten Separierabschnitt 13 werden die Separiertransportspuren seitlich zum einen in der Mitte durch die Leitelemente 15.1,.15.2 begrenzt und zum anderen an der Seite der Bandseitenkanten durch die parallel zur Förderrichtung F ausgerichteten Seitenelemente 18.1, 18.2.

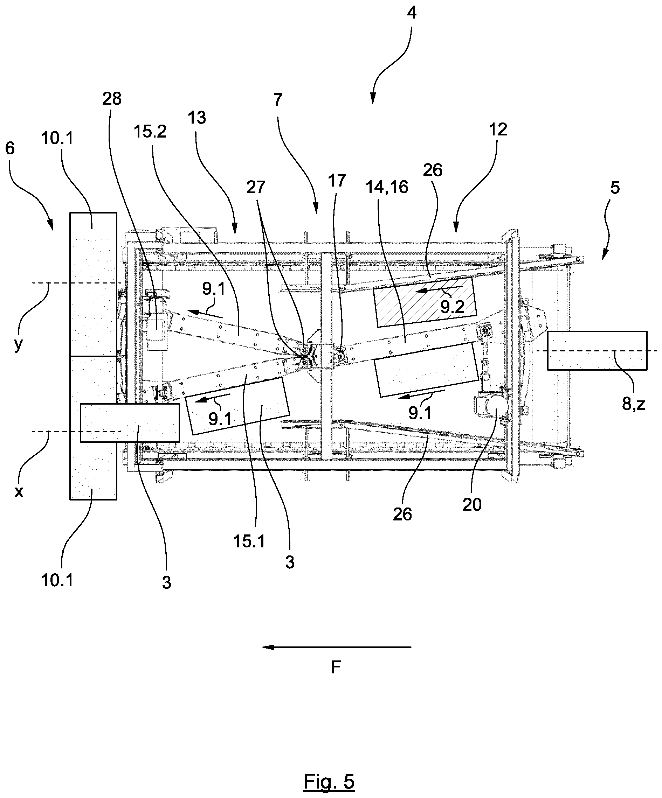

Fig. 5 zeigt eine Draufsicht auf eine Ausführungsform des erfindungsgemäßen Separierförderers 4. Aus dieser geht insbesondere die mittige Positionierung eines aus der Abgabeseite 6 des Separierförderers 4 ausströmenden Sacks 3 im Bezug auf einen nachfolgenden Ausrichtförderer 10.1 hervor. In der gezeigten Darstellung befindet sich das Separierschwert 16 in einer oberen Auslenkposition, so dass die mittig einströmenden Säcke 3 auf die untere Führungskante des Separierschwerts 16 zulaufen und, so lange das Separierschwert 16 nicht verstellt wird, ausschließliche passiv entlang dieser leicht verdreht in Richtung der unteren Außenkante des Förderers geführt werden. Das untere Leitelement 15.1 ist in dieser Ausrichtung des Separierschwerts 16 im Wesentlichen kollinear mit der unteren Führungskante des Separierschwerts 16 ausgerichtet, so dass der Sack 3 beim Übergang zwischen dem Separierschwert 16 und dem Leitelement 15.1 keine oder nur eine geringefügige Richtungsänderung erfährt.

Der sich auf der oberen Separiertransportspur befindende Sack 3 verdeutlicht beispielhaft den Weg eines Sacks, welcher sich beim Umschwenken des Separierschwerts 16 an dessen stromaufwärtigen Ende befindet. Durch das Auslenken des Separierschwerts 16 werden die neben diesem befindlichen Säcke aktiv aus ihrer Transportachse ausgelenkt. Dadurch, dass das stromaufwärtige Ende des Separierschwerts 16 der Außenkante des Förderers am nächsten gelegen ist, findet in diesem Bereich die größte aktive Auslenkung der Säcke 3 statt. Der dargestellte Sack in der oberen Separiertransportspur zeigt diesen Grad der Auslenkung. Dadurch, dass der Sack eine große Auslenkung erfahren hat, steht dieser nun in Kontakt mit der Seitenführungsschiene 26, an welcher dieser bis zum Erreichen des zweiten Separierabschnitts 13 wieder geringfügig in Richtung Mitte des Separierförderers geführt wird. Beim Verlassen des ersten Separierabschnitts 12 wird der Sack 3 seitlich durch die Seitenführung 26 geführt und läuft auf das Leitelement 15.2 zu. Beim Weiterfördern des Sacks 3 wird dieser entlang des Leitelements 15.2 weiter in Richtung der Bandseitenkante gedrängt. Beim Auftreffen des Sacks 3 auf das Seitenelement 18.1 wird der Sack 3 wieder in eine Ausrichtung parallel zur Förderrichtung F gedreht, so dass der Sack 3 in gerader Ausrichtung auf eine mittige Transportachse X der nachfolgenden Klammer-Drehvorrichtung 11.1 übergeben wird. Es ist zu erkennen, dass die Leitelemente 15.1, 15.2 um Schwenkachsen 27 verschwenkbar sind. Ferner ist zu erkennen, dass das Separierschwert 16 um eine Schwenkachse 17 verschwenkbar ist. Das Separierschwert 16 ist über eine motorische Verstelleinrichtung 20 verschwenkbar. Der abgabeseitige Abstand der Leitelemente 15.1, 15.2 ist über einen Verstellmotor 28 einstellbar, so dass entsprechend die Breite der Separiertransportspuren auf unterschiedliche Breiten von Transportgütern eingestellt werden kann.

### Bezugszeichenliste

- 1: Palettierer
- 2: Zuförderer
- 3: Sack
- 4: Separierförderer
- 5: Empfangsseite
- 6: Abgabeseite
- 7: Separiereinrichtung
- 8: Empfangstransportspur
- 9.1: Separiertransportspur
- 9.2: Separiertransportspur
- 10.1: erster Ausrichtförderer
- 10.2: zweiter Ausrichtförderer
- 11.1: Klammer-Drehvorrichtung
- 11.2: Klammer-Drehvorrichtung
- 12: erster Separierabschnitt
- 13: zweiter Separierabschnitt
- 14: bewegliches Auslenkelement
- 15.1: Leitelement
- 15.2: Leitelement
- 16: Separierschwert
- 17: Schwenkachse Separierschwert
- 18.1: Seitenelement
- 18.2: Seitenelement
- 19: Eingangsförderer
- 20: motorische Verstelleinrichtung
- 21: Ablegetisch
- 22: Hubwerk
- 23: Hubwerksrollenbahn
- 24: Abschieber
- 25: Schwerkraftrollenbahn
- 26: Seitenführungen
- 27: Schwenkachse Leitelement
- 28: Verstellmotor Leitelement
- F: Förderrichtung
- X, Y, Z: Transportachsen
- A: vertikale Rotierachse
- B: Sackbreite
- L: Sacklänge
- D: Sackdiagonale

## Patentansprüche

1. Zuförderer (2) zum Separieren eines Stroms von, insbesondere gleichförmigen, Verpackungseinheiten (3) zur Verwendung in einem Palettierer (1) zum Palettieren der Verpackungseinheiten (3),
mit einem in einer Förderrichtung (F) laufenden Separierförderer (4), welcher eine Empfangsseite (5) zum Empfangen eines Stroms von, insbesondere gleichförmigen, Verpackungseinheiten (3) und eine Abgabeseite (6) zum Abgeben der Verpackungseinheiten (3) aufweist, wobei der Separierförderer (4) eine Separiereinrichtung (7) aufweist, welche dazu eingerichtet ist, den an der Empfangsseite (5) in einer einzelnen Empfangstransportspur (8) ankommenden Strom von Verpackungseinheiten (3), beispielsweise alternierend, in zwei an der Abgabeseite (6) ausströmende Separiertransportspuren (9.1, 9.2) aufzuteilen,
und mit zumindest zwei stromabwärts der Abgabeseite (6) nebeneinander angeordneten Ausrichtförderern (10.1, 10.2), welche jeweils eine Drehvorrichtung (11.1, 11.2) aufweisen oder als solche ausgebildet sind, eine auf dem jeweiligen Ausrichtförderer (10.1, 10.2) transportierte Verpackungseinheit (3) horizontal zu rotieren,
wobei die zwei an der Abgabeseite (6) des Separierförderers (4) abfließenden und durch die Separiereinrichtung (7) erzeugten Separiertransportspuren (9.1, 9.2) einerseits und die Drehvorrichtungen (11.1, 11.2) andererseits so zueinander ausgerichtet sind, dass die Übergabe der Verpackungseinheiten (3) vom Separierförderer (4) jeweils auf eine mittige Transportachse (X, Y) der Drehvorrichtung (11.1, 11.2) erfolgt,
**dadurch gekennzeichnet, dass** die Separiereinrichtung (7) in Förderrichtung (F) einen ersten (12) und einen zweiten Separierabschnitt (13) aufweist, wobei die Separiereinrichtung (7) im ersten Separierabschnitt (12) ein bewegliches Auslenkelement (14) zum aktiven seitlichen Auslenken der Verpackungseinheiten (3) aus ihrer Transportposition aufweist und im zweiten Separierabschnitt (13) zumindest ein die Separiertransportspuren (9.19.2) jeweils mittig begrenzendes Leitelement (15.1, 15.2) zum passiven seitlichen Auslenken der Verpackungseinheiten (3) aus ihrer Transportposition aufweist, wobei die Separiertransportspur (9.1, 9.2) im ersten Separierabschnitt (12) zur Mitte des Separierförderers (4) hin ausgerichtet ist und im zweiten Separierabschnitt (13) zu einer Seitenkante des Separierförderers (4) hin ausgerichtet ist.

2. Zuförderer (2) nach Anspruch 1, wobei die Drehvorrichtungen dazu ausgebildet sind, die Verpackungseinheiten (3) um eine vertikale Achse (C) zu rotieren, welche die mittige Transportachse (X, Y) der jeweiligen Drehvorrichtungen (10.1, 10.2) schneidet.

3. Zuförderer (2) nach Anspruch 1 oder 2, wobei die Ausrichtförderer (10.1, 10.2) jeweils als Doppelband-Drehvorrichtung ausgebildet sind oder jeweils eine Klammer-Drehvorrichtung (11.1, 11.2) aufweisen.

4. Zuförderer (2) nach einem der Ansprüche1 bis 3, wobei die Transportachsen (X, Y) der Drehvorrichtungen jeweils kollinear zu einer jeweiligen Mittelachse der Separiertransportspuren (9.1, 9.2) ausgerichtet sind.

5. Zuförderer (2) nach einem der Ansprüche 1 bis 4, wobei das Separieren der Verpackungseinheiten (3) auf die zwei Separiertransportspuren (9.1, 9.2) im Zuge des Förderns der Verpackungseinheiten (3) entlang des Separierförderers (4) erfolgt.

6. Zuförderer (2) nach einem der vorangehenden Ansprüche, wobei der Empfangsseite (5) des Separierförderers (4) ein Eingangsförderer (19) zum Anliefern des in einer einzelnen Empfangstransportspur (8) laufenden Stroms von Verpackungseinheiten (3) stromaufwärts vorgelagert ist, wobei die Aufgabe der Verpackungseinheiten (3) auf den Separierförderer (4) auf eine mittige Transportachse (Z) erfolgt.

7. Zuförderer (2) nach einem der vorangehenden Ansprüche, wobei das bewegliche Auslenkelement (14) ein zwischen zwei Auslenkpositionen verschwenkbares, sich im Wesentlichen in Förderrichtung (F) erstreckendes Separierschwert (16) aufweist.

8. Zuförderer (2) nach einem der vorangehenden Ansprüche, wobei in einer ersten Auslenkposition der Separiereinrichtung (7) empfangsseitig ankommende Verpackungseinheiten (3) in eine erste der Separiertransportspuren (9.1) und in einer zweiten Auslenkposition der Separiereinrichtung (7) empfangsseitig ankommende Verpackungseinheiten (3) in eine zweite der Separiertransportspuren (9.2) strömen.

9. Zuförderer (2) nach einem der vorangehenden Ansprüche, wobei zum passiven Auslenken im zweiten Separierabschnitt (13) das Entlangführen der Verpackungseinheiten (3) an den zur Außenseite des Separierförderers (4) gerichteten Leitelementen (15.1, 15.2) erfolgt, wobei die Leitelemente (15.1, 15.2) beim Entlangführen der Verpackungseinheiten (3) stillstehen.

10. Zuförderer (2) nach einem der vorangehenden Ansprüche, wobei durch die stromabwärtigen Enden der Leitelemente (15.1, 15.2) eine mittlere Begrenzung der jeweiligen Separiertransportspur (9.1, 9.2) für die aus der Abgabeseite (6) des Separierförderers (4) ausströmenden Verpackungseinheiten (3) bereitgestellt ist.

11. Zuförderer (2) nach einem der vorangehenden Ansprüche, wobei mittels der Leitelemente (15.1, 15.2) unterschiedliche Breiten der Separiertransportspuren (9.1, 9.2) einstellbar sind.

12. Zuförderer (2) nach Anspruch 11, wobei die Leitelemente (15.1, 15.2) zumindest einen Motor (28) aufweisen, mittels welchem diese verstellbar sind.

13. Zuförderer (2) nach einem der vorangehenden Ansprüche, welcher zumindest zwei den Übergang zwischen dem Separierförderer (4) und den Ausrichtförderern (10.1, 10.2) jeweils in Förderrichtung (F) überbrückend angeordnete Seitenelemente (18) aufweist, durch welche jeweils eine seitliche Begrenzung der jeweiligen Separiertransportspur (9.1, 9.2) für die aus der Abgabeseite (6) des Separierförderers (4) ausströmenden Verpackungseinheiten (3) bereitgestellt ist.

14. Verfahren zum Betreiben eines Zuförderers (2) nach einem der vorangehenden Ansprüche, aufweisend die Schritte:
Mittiges Aufgeben eines kontinuierlichen Stroms von, insbesondere gleichförmigen, Verpackungseinheiten (3) auf die Empfangsseite (5) eines Separierförderers (4);
Verschieben zumindest einer ersten Verpackungseinheit (3) in Richtung einer ersten Außenseite des Separierförderers (4) mittels einer dem Separierförderer (4) zugeordneten Separiereinrichtung (7);
Verschieben zumindest einer zweiten Verpackungseinheit (3) in Richtung einer zweiten Außenseite des Separierförderers (4) mittels der Separiereinrichtung (7);
Übergeben der ersten Verpackungseinheit (3) auf eine mittige Transportachse (X) einer dem Separierförderer (4) stromabwärts nachfolgenden ersten Drehvorrichtung (11.1);
Übergeben der zweiten Verpackungseinheit (3) auf eine mittige Transportachse (Y) einer dem Separierförderer (4) stromabwärts nachfolgenden zweiten Drehvorrichtung (11.2).

15. Verfahren nach Anspruch 14, ferner aufweisend den Schritt:
Horizontales Drehen der ersten und/oder der zweiten Verpackungseinheit (3) auf dem ersten und/oder zweiten Ausrichtförderer (10.1, 10.2) um etwa 90 Grad mittels einer die jeweilige Verpackungseinheit (3) um ihre vertikale Mittelachse (C) rotierenden Drehvorrichtung (11.1, 11.2).

16. Verfahren nach Anspruch 14 oder 15, wobei die Verpackungseinheiten (3) durch die Drehvorrichtungen so gedreht werden, dass die vertikale Mittelachse (C) der Verpackungseinheit (3) vor und nach dem Verdrehen die mittige Transportachse (X, Y) der Drehvorrichtungen (11.1, 11.2) schneidet.

17. Verfahren nach einem der Ansprüche 14 bis 16, wobei die Ausrichtförderer (10.1, 10.2) als Doppelband-Drehvorrichtungen ausgebildet sind oder eine Klammer-Drehvorrichtung aufweisen.

18. Verfahren nach einem der Ansprüche 14 bis 17, wobei die Verpackungseinheiten (3) eine größere Länge (L) als Breite (B) aufweisen und in Längsausrichtung auf den Separierförderer (4) aufgegeben werden.

19. Verfahren nach einem der Ansprüche 14 bis 18, wobei die Ausrichtförderer (10.1, 10,2) jeweils eine Breite (B_{AF}) aufweisen, welche größer ist als die größte Abmessung der Verpackungseinheit (3), insbesondere deren Diagonalabmessung (D).

20. Verfahren nach einem der Ansprüche 14 bis 19, wobei das Verschieben der Verpackungseinheiten (3) in Richtung der Außenseiten des Separierförderers (4) in einem ersten Abschnitt (12) ein aktives Verschieben umfasst und in einem zweiten Abschnitt (13) ein passives Verschieben umfasst.

21. Verfahren nach Anspruch 20, wobei das passive Verschieben der Verpackungseinheiten (3) das Entlangführen der Verpackungseinheiten (3) entlang eines in Förderrichtung (F) zur Außenseite des Separierförderers (4) gerichteten Leitelements (15.1, 15.2) umfasst.

## Claims

1. Feed conveyor (2) for separating a flow of, in particular uniform, packaging units (3) for use in a palletizer (1) for palletizing the packaging units (3),
having a separating conveyor (4) which runs in a conveying direction (F) and which has a receiving side (5) for receiving a flow of, in particular uniform, packaging units (3) and a discharge side (6) for discharging the packaging units (3), wherein the separating conveyor (4) has a separating device (7) which is set up to divide the flow of packaging units (3) arriving at the receiving side (5) in a single receiving transport track (8), for example alternately, into two separating transport tracks (9.1, 9.2) flowing out at the discharge side (6),
and having at least two aligning conveyors (10.1, 10.2) which are arranged next to one another downstream of the discharge side (6) and which each have a rotating device (11.1, 11.2) or are designed as such to horizontally rotate a packaging unit (3) transported on the respective aligning conveyor (10.1, 10.2), wherein the two separating transport tracks (9.1, 9.2) flowing out at the discharge side (6) of the separating conveyor (4) and generated by the separating device (7), on the one hand, and the rotating devices (11.1, 11.2), on the other hand, are aligned with respect to one another such that the transfer of the packaging units (3) from the separating conveyor (4) takes place in each case on a central transport axis (X, Y) of the rotating device (11.1, 11.2), **characterized in that** the separating device (7) has a first (12) and a second separating section (13) in the conveying direction (F), wherein the separating device (7) has, in the first separating section (12), a movable deflecting element (14) for actively laterally deflecting the packaging units (3) out of their transport position and has, in the second separating section (13), at least one guide element (15.1, 15.2) which in each case centrally delimits the separating transport tracks (9.1, 9.2) for passively laterally deflecting the packaging units (3) out of their transport position,
wherein the separating transport track (9.1, 9.2) is aligned towards the centre of the separating conveyor (4) in the first separating section (12) and is aligned towards a side edge of the separating conveyor (4) in the second separating section (13).

2. Feed conveyor (2) according to claim 1, wherein the rotating devices are designed to rotate the packaging units (3) about a vertical axis (C) which intersects the central transport axis (X, Y) of the respective rotating devices (10.1, 10.2).

3. Feed conveyor (2) according to claim 1 or 2, wherein the aligning conveyors (10.1, 10.2) are each designed as a double-belt rotating device or each have a clamp rotating device (11.1, 11.2).

4. Feed conveyor (2) according to one of claims 1 to 3, wherein the transport axes (X, Y) of the rotating devices are each aligned collinearly with respect to a respective centre axis of the separating transport tracks (9.1, 9.2).

5. Feed conveyor (2) according to one of claims 1 to 4, wherein the separating of the packaging units (3) onto the two separating transport tracks (9.1, 9.2) takes place in the course of the conveying of the packaging units (3) along the separating conveyor (4).

6. Feed conveyor (2) according to one of the preceding claims, wherein an input conveyor (19) for delivering the flow of packaging units (3) running in a single receiving transport track (8) is arranged upstream of the receiving side (5) of the separating conveyor (4), wherein the delivery of the packaging units (3) onto the separating conveyor (4) takes place on a central transport axis (Z).

7. Feed conveyor (2) according to one of the preceding claims, wherein the movable deflecting element (14) has a separating blade (16) which is pivotable between two deflecting positions and extends substantially in the conveying direction (F).

8. Feed conveyor (2) according to one of the preceding claims, wherein, in a first deflecting position of the separating device (7), packaging units (3) arriving on the receiving side flow into a first of the separating transport tracks (9.1) and, in a second deflecting position of the separating device (7), packaging units (3) arriving on the receiving side flow into a second of the separating transport tracks (9.2).

9. Feed conveyor (2) according to one of the preceding claims, wherein, for passive deflection in the second separating section (13), the guiding of the packaging units (3) along takes place on the guide elements (15.1, 15.2) directed towards the outer side of the separating conveyor (4), wherein the guide elements (15.1, 15.2) stand still during the guiding of the packaging units (3) along.

10. Feed conveyor (2) according to one of the preceding claims, wherein, as a result of the downstream ends of the guide elements (15.1, 15.2), a central boundary of the respective separating transport track (9.1, 9.2) is provided for the packaging units (3) flowing out of the discharge side (6) of the separating conveyor (4).

11. Feed conveyor (2) according to one of the preceding claims, wherein, by means of the guide elements (15.1, 15.2), different widths of the separating transport tracks (9.1, 9.2) can be set.

12. Feed conveyor (2) according to claim 11, wherein the guide elements (15.1, 15.2) have at least one motor (28), by means of which they can be adjusted.

13. Feed conveyor (2) according to one of the preceding claims, which has at least two side elements (18) which bridge the transition between the separating conveyor (4) and the aligning conveyors (10.1, 10.2) in each case in the conveying direction (F) and by means of which in each case a lateral boundary of the respective separating transport track (9.1, 9.2) is provided for the packaging units (3) flowing out of the discharge side (6) of the separating conveyor (4).

14. Method for operating a feed conveyor (2) according to one of the preceding claims, having the steps:
centrally feeding a continuous flow of, in particular uniform, packaging units (3) onto the receiving side (5) of a separating conveyor (4);
displacing at least one first packaging unit (3) in the direction of a first outer side of the separating conveyor (4) by means of a separating device (7) assigned to the separating conveyor (4);
displacing at least one second packaging unit (3) in the direction of a second outer side of the separating conveyor (4) by means of the separating device (7);
transferring the first packaging unit (3) onto a central transport axis (X) of a first rotating device (11.1) following downstream of the separating conveyor (4);
transferring the second packaging unit (3) onto a central transport axis (Y) of a second rotating device (11.2) following downstream of the separating conveyor (4).

15. Method according to claim 14, further having the step:
horizontally rotating the first and/or the second packaging unit (3) on the first and/or second aligning conveyor (10.1, 10.2) by approximately 90 degrees by means of a rotating device (11.1, 11.2) rotating the respective packaging unit (3) about its vertical centre axis (C).

16. Method according to claim 14 or 15, wherein the packaging units (3) are rotated by the rotating devices such that the vertical centre axis (C) of the packaging unit (3), before and after the rotation, intersects the central transport axis (X, Y) of the rotating devices (11.1, 11.2).

17. Method according to one of claims 14 to 16, wherein the aligning conveyors (10.1, 10.2) are designed as double-belt rotating devices or have a clamp rotating device.

18. Method according to one of claims 14 to 17, wherein the packaging units (3) have a greater length (L) than width (B) and are fed onto the separating conveyor (4) in longitudinal alignment.

19. Method according to one of claims 14 to 18, wherein the aligning conveyors (10.1, 10.2) each have a width (BAF) which is greater than the greatest dimension of the packaging unit (3), in particular the diagonal dimension (D) thereof.

20. Method according to one of claims 14 to 19, wherein the displacement of the packaging units (3) in the direction of the outer sides of the separating conveyor (4) comprises an active displacement in a first section (12) and comprises a passive displacement in a second section (13).

21. Method according to claim 20, wherein the passive displacement of the packaging units (3) comprises the guiding of the packaging units (3) along a guide element (15.1, 15.2) directed towards the outer side of the separating conveyor (4) in the conveying direction (F).

## Revendications

1. Convoyeur d'alimentation (2) pour la séparation d'un flux, plus particulièrement uniforme, d'unités d'emballage (3), destiné à être utilisé dans un palettiseur (1) pour la palettisation des unités d'emballage (3),
avec un convoyeur de séparation (4) fonctionnant dans une direction de convoyage (F), qui comprend un côté de réception (5) pour la réception d'un flux, plus particulièrement uniforme, d'unités d'emballage (3) et un côté de distribution (6) pour la distribution des unités d'emballage (3), dans lequel le convoyeur de séparation (4) comprend un dispositif de séparation (7) qui est conçu pour diviser le flux d'unités d'emballage (3) arrivant au niveau du côté de réception (5) dans une seule piste de transport de réception (8), par exemple de manière alternée, en deux pistes de transport de séparation (9.1, 9.2) sortant au niveau du côté de distribution (6),
et avec au moins deux convoyeurs d'orientation (10.1, 10.2) juxtaposés en aval du côté de distribution (6), qui comprennent chacun un dispositif de rotation (11.1, 11.2) ou qui sont conçus en tant que tels, afin de faire tourner horizontalement une unité d'emballage (3) transportée sur le convoyeur d'orientation (10.1, 10.2) respectif,
dans lequel les deux pistes de transport de séparation (9.1, 9.2) s'écoulant au niveau du côté de distribution (6) du convoyeur de séparation (4) et créées par le dispositif de séparation (7) d'une part et les dispositifs de rotation (11.1, 11.2) d'autre part sont orientés les uns par rapport aux autres de sorte que le transfert des unités d'emballage (3) du convoyeur de séparation (4) a lieu respectivement sur un axe de transport central (X, Y) du dispositif de rotation (11.1, 11.2),
**caractérisé en ce que** le dispositif de séparation (7) comprend, dans la direction de convoyage (F), une première (12) et une deuxième (13) portions de séparation, dans lequel le dispositif de séparation (7) comprend, dans la première portion de séparation (12), un élément de déviation mobile (14) pour la déviation latérale active des unités (3) hors de leur position de transport et, dans la deuxième portion de séparation (13), au moins un élément de guidage (15.1, 15.2) délimitant respectivement de manière centrale les pistes de transport de séparation (9.1, 9.2), pour la déviation latérale passive des unités d'emballage (3) hors de leur position de transport, dans lequel la piste de transport de séparation (9.1, 9.2) est orientée, dans la première portion de séparation (12), vers le centre du convoyeur de séparation (4) et est orientée, dans la deuxième portion de séparation (13), vers une arête latérale du convoyeur de séparation (4).

2. Convoyeur d'alimentation (2) selon la revendication 1, dans lequel les dispositifs de rotation sont conçus pour faire tourner les unités d'emballage (3) autour d'un axe vertical (C) qui coupe l'axe de transport central (X, Y) des dispositifs de rotation (10.1, 10.2) respectifs.

3. Convoyeur d'alimentation (2) selon la revendication 1 ou 2, dans lequel les convoyeurs d'orientation (10.1, 10.2) sont conçus chacun comme un dispositif de rotation à double bande ou comprennent chacun un dispositif de rotation à étrier (11.1, 11.2).

4. Convoyeur d'alimentation (2) selon l'une des revendications 1 à 3, dans lequel les axes de transport (X, Y) des dispositifs de rotation sont conçus respectivement de manière colinéaire par rapport à un axe central respectif des pistes de transport de séparation (9.1, 9.2).

5. Convoyeur d'alimentation (2) selon l'une des revendications 1 à 4, dans lequel la séparation des unités d'emballage (3) a lieu sur les deux pistes de transport de séparation (9.1, 9.2) au cours du convoyage des unités d'emballage (3) le long du convoyeur de séparation (4).

6. Convoyeur d'alimentation (2) selon l'une des revendications précédentes, dans lequel, en amont du côté de réception (5) du convoyeur de séparation (4), est disposé un convoyeur d'entrée (19) pour la livraison du flux d'unités d'emballage (3) s'écoulant dans une seule piste de transport de réception (8), dans lequel le transfert des unités d'emballage (3) vers le convoyeur de séparation (4) a lieu sur un axe de transport central (Z).

7. Convoyeur d'alimentation (2) selon l'une des revendications précédentes, dans lequel l'élément de déviation mobile (14) comprend une lame de séparation (16) pivotant entre deux positions de déviation et s'étendant globalement dans la direction de convoyage (F).

8. Convoyeur d'alimentation (2) selon l'une des revendications précédentes, dans lequel, dans une première position de déviation du dispositif de séparation (7), les unités d'emballage (3) arrivant côté réception s'écoulent dans une première des pistes de transport de séparation (9.1) et, dans une deuxième position de déviation du dispositif de séparation (7), les unités d'emballage (3) arrivant côté réception s'écoulent dans une deuxième des pistes de transport de séparation (9.2).

9. Convoyeur d'alimentation (2) selon l'une des revendications précédentes, dans lequel, pour la déviation passive, dans la deuxième portion de séparation (13), le guidage des unités d'emballage (3) a lieu le long des éléments de guidage (15.1, 15.2) orientés le long du côté externe du convoyeur de séparation (4), dans lequel les éléments de guidage (15.1, 15.2) sont immobiles lors du guidage des unités d'emballage (3).

10. Convoyeur d'alimentation (2) selon l'une des revendications précédentes, dans lequel, à travers les extrémités aval des éléments de guidage (15.1, 15.2), est mise à disposition une limitation centrale de la piste de transport de séparation (9.1, 9.2) respective pour les unités d'emballage (3) sortant du côté de distribution (6) du convoyeur de séparation (4).

11. Convoyeur d'alimentation (2) selon l'une des revendications précédentes, dans lequel, au moyen des éléments de guidage (15.1, 15.2), des largeurs différentes de pistes de transport de séparation (9.1, 9.2) peuvent être ajustées.

12. Convoyeur d'alimentation (2) selon la revendication 11, dans lequel les éléments de guidage (15.1, 15.2) comprennent au moins un moteur (28) afin de pouvoir régler ceux-ci.

13. Convoyeur d'alimentation (2) selon l'une des revendications précédentes, qui comprend au moins deux éléments latéraux (18) franchissant la transition entre le convoyeur de séparation (4) et les convoyeurs d'orientation (10.1, 10.2) respectivement dans la direction de convoyage (F), à l'aide desquels est mise à disposition respectivement une limitation latérale de la piste de transport de séparation (9.1, 9.2) respective pour les unités d'emballage (3) sortant du côté de distribution (6) du convoyeur de séparation (4).

14. Procédé de fonctionnement d'un convoyeur d'alimentation (2) selon l'une des revendications précédentes, comprenant les étapes suivantes :
transfert central d'un flux continu d'unités d'emballage (3), plus particulièrement uniformes, vers le côté de réception (5) d'un convoyeur de séparation (4) ;
déplacement d'au moins une première unité d'emballage (3) en direction d'un premier côté externe du convoyeur de séparation (4) au moyen d'un dispositif de séparation (7) correspondant au convoyeur de séparation (4) ;
déplacement d'au moins une deuxième unité d'emballage (3) en direction d'un deuxième côté externe du convoyeur de séparation (4) au moyen du dispositif de séparation (7) ;
transfert de la première unité d'emballage (3) sur un axe de transport central (X) d'un premier dispositif de rotation (11.1) suivant en aval du convoyeur de séparation (4) ;
transfert de la deuxième unité d'emballage (3) sur un axe de transport central (Y) d'un deuxième dispositif de rotation (11.2) suivant en aval du convoyeur de séparation (4).

15. Procédé selon la revendication 14, comprenant en outre l'étape suivante :
rotation horizontale de la première et/ou de la deuxième unité d'emballage (3) sur le premier et/ou le deuxième convoyeur d'orientation (10.1, 10.2) d'environ 90 degrés au moyen d'un dispositif de rotation (11.1, 11.2) qui met en rotation l'unité d'emballage (3) respectif autour de son axe central vertical (C).

16. Procédé selon la revendication 14 ou 15, dans lequel les unités d'emballage (3) sont mises en rotation par les dispositifs de rotation de sorte que l'axe central vertical (C) de l'unité d'emballage (3) coupe, avant et après la rotation, l'axe de transport central (X, Y) des dispositifs de rotation (11.1, 11.2).

17. Procédé selon l'une des revendications 14 à 16, dans lequel les convoyeurs d'orientation (10.1, 10.2) sont conçus comme des dispositifs de rotation à doubles bandes ou comprennent un dispositif de rotation à étrier.

18. Procédé selon l'une des revendications 14 à 17, dans lequel les unités d'emballage (3) présentent une longueur (L) supérieure à la largeur (B) et sont transférées dans l'orientation longitudinale sur le convoyeur de séparation (4).

19. Procédé selon l'une des revendications 14 à 18, dans lequel les convoyeurs d'orientation (10.1, 10.2) présentent chacun une largeur (B_{AF}) qui est supérieure à la dimension la plus grande de l'unité d'emballage (3), plus particulièrement sa dimension diagonale (D).

20. Procédé selon l'une des revendications 14 à 19, dans lequel le déplacement des unités d'emballage (3) en direction des côtés externes du convoyeur de séparation (4) comprend, dans une première portion (12), un déplacement actif et, dans une deuxième portion (13), un déplacement passif.

21. Procédé selon la revendication 20, dans lequel le déplacement passif des unités d'emballage (3) comprend le guidage des unités d'emballage (3) le long d'un élément de guidage (15.1, 15.2) orienté dans la direction de convoyage (F) vers le côté externe du convoyeur de séparation (4).
